# EUROPÄISCHE PATENTSCHRIFT

(11) **EP 0 919 454 B1**
(45) Veröffentlichungstag und Bekanntmachung des Hinweises auf die Patenterteilung: **03.04.2002**
(21) Anmeldenummer: 98122088.2
(22) Anmeldetag: 21.11.1998
(51) Int. Cl.: B62D 25/02, B62D 25/20, B62D 25/04

(54) **Karosseriesegment für ein Fahrzeug**
Body segment for a vehicle
Segment de carrosserie d'un véhicule

(30) Priorität: 01.12.1997 DE 19753207
(43) Veröffentlichungstag der Anmeldung: 02.06.1999
(73) Patentinhaber: DaimlerChrysler AG, 70567 Stuttgart (DE)
(72) Erfinder: Brodt, Martin, 71272 Renningen (DE); Determann, Reinhard, 71083 Herrenberg (DE); Wollensak, Karl, 72184 Eutingen (DE)

(56) Entgegenhaltungen:
- EP-A- 0 728 656
- US-A- 4 552 400
- US-A- 5 443 297

## Beschreibung

Die Erfindung betrifft ein Karosseriesegment für ein Fahrzeug im Bereich einer Seitenwand nach der im Oberbegriff von Anspruch 1 näher definierten Art.

Ein gattungsgemäßes Karosseriesegment beschreibt die US 5 443 297 A.

Nachteilig bei diesem bekannten Karosseriesegment ist jedoch die unzureichende Sicherheit bei einem Seitenaufprall sowie seine relativ aufwendige Herstellung.

Eine Seitenwandbaugruppe für eine Kraftfahrzeugkarosserie ist aus der DE 195 31 874 C1 bekannt.

Durch die großen Einzelteile, die hier zu der Baugruppe zusammengefügt werden, müssen jedoch äußerst große Werkzeuge und Maschinen verwendet werden, was die Herstellung der Karosserie entsprechend verteuert. Des weiteren ist auch der Seitenaufprallschutz nicht vollständig ausgereift.

Aus der DE 195 05 364 A1 ist ein hohlprofilartiges Karosseriesegment für ein Fahrzeug bekannt, das wenigstens ein Träger- oder Wandungselement mit einem Anschlußbereich für ein Funktionsteil oder eine Funktionsbaugruppe aufweist. In diesem Anschlußbereich ist ein Element einer Führungsschieneneinrichtung integraler Bestandteil des Karosseriesegmentes, welches aus einer zusammenhängenden Platine durch Rollumformung erzeugt worden ist.

Um die Belastbarkeit des Karosseriesegmentes zu erhöhen sind dabei Zonen partieller Härtung oder bestimmter Oberflächenbehandlungen vorgesehen. Zur Erhöhung der Steifigkeit kann auch eine in das Innere des Karosseriesegments eingerollte Doppelwandrippe vorgesehen sein.

Eine besonders hohe Sicherheit und Steifigkeit im Falle eines seitlichen Aufpralls eines anderen Fahrzeugs ist jedoch durch den dort beschriebenen Aufbau nicht gegeben.

Die DE 40 13 784 C2 beschreibt einen Wagenkasten für Personenkraftwagen mit einem Längsträger und einem Schweller, die jeweils aus Strangpreßprofilen gebildet und durch ein Gußteil verbunden sind. Durch diesen Aufbau soll die Steifigkeit im Bereich der Verbindung zwischen dem vorderen Längsträger und dem Schweller verbessert werden.

Nachteilig dabei ist jedoch, daß es sich bei dem Verbindungs- bzw. Knotenelement um ein äußerst kompliziertes Gußteil handelt, dessen Herstellung sehr aufwendig ist. Darüber hinaus kann dadurch auch nicht die gewünschte Sicherheit im Crashfall gewährleistet werden.

Des weiteren beschreibt die DE 195 19 779 A1 ein Rahmenseitenteil einer Karosserie von Personenkraftwagen. Die das Rahmenseitenteil bildenden Profilteile sind dabei durch Strangpressen und die Verbindungselemente für die Profilteile durch Gießen hergestellt.

Auch hierbei ist der relativ komplizierte Aufbau und die geringe Crashsicherheit nachteilig.

Aus der US-PS 3,176,786 ist ein Kraftfahrzeugrahmen mit Längs- und Querträgern bekannt. Dieser Rahmen stellt eine lange Zeit übliche, jedoch den heutigen Sicherheitsanforderungen bei weitem nicht mehr entsprechenden Bauweise dar.

Es ist daher Aufgabe der Erfindung, ein Karosseriesegment für ein Fahrzeug, insbesondere im Bereich einer Seitenwand, zu schaffen, welches bei einem seitlichen Aufprall hohe Kräfte aufnehmen kann und somit zu einer Erhöhung der Fahrzeugsicherheit beiträgt. Das erfindungsgemäße Karosseriesegment soll dabei günstig in der Herstellung sein.

Diese Aufgabe wird erfindungsgemäß durch die im kennzeichnenden Teil von Anspruch 1 genannten Merkmale gelöst.

Durch die Profilverlagerung zur Karosserieaußenseite hin erhält das C-förmige Profilteil eine sehr hohe Steifigkeit und kann die bei einem Seitenaufprall auftretenden hohen Kräfte aufnehmen. Die hohe Steifigkeit des Profilteiles wird zusätzlich durch den Einsatz eines hochfesten Stahles unterstützt.

Die Herstellung des Profilteils durch Walzprofilieren hat sich dabei als besonders vorteilhaft herausgestellt, da mit diesem Verfahren die notwendige, sehr starke Verlagerung des Profils zur Karosserieaußenseite hin möglich ist. Dabei kann das Profilteil um so mehr Kräfte aufnehmen, je stärker die Verlagerung zur Karosserieaußenseite hin bzw. je tiefer das Profil ist.

Die erfindungsgemäßen, als eine Art Anlaufschräge ausgebildeten Schließteile dienen dabei zur Abstützung des A-Säulen-Innenteils und des B-Säulen-Innenteils an dem Profilteil, wodurch die Festigkeit des gesamten Karosseriesegmentes verbessert wird.

Vorteilhafte Ausgestaltungen und Weiterbildungen der Erfindung sind aus den Unteransprüchen und dem nachfolgend anhand der Zeichnung prinzipmäßig dargestellten Ausführungsbeispiel ersichtlich.

Es zeigt:
- Fig. 1: eine Explosionsdarstellung des erfindungsgemäßen Karosseriesegments,
- Fig. 2: eine Zusammenbauzeichnung des erfindungsgemäßen Karosseriesegments; und
- Fig. 3: einen Schnitt nach der Linie III-III aus Fig. 2.

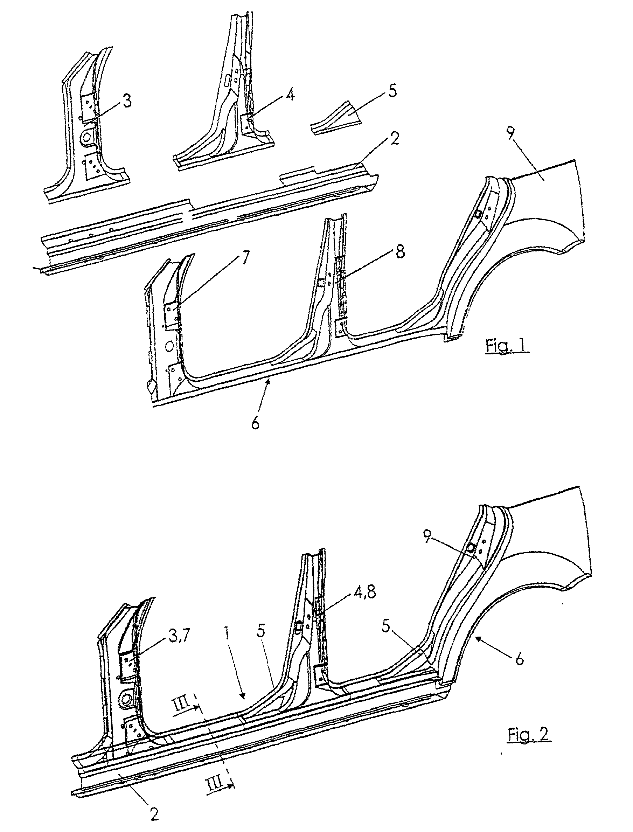

Fig. 1 zeigt die Einzelteile eines als Seitenwand 1 ausgebildeten Karosseriesegments, die in Fig. 2 im zusammengebauten Zustand dargestellt ist. Die übrigen Karosserieteile des Fahrzeugs, zu dem die Seitenwand 1 gehört, sind in den Figuren nicht dargestellt, da sie von bekannter bzw. beliebiger Bauart sein können.

Im unteren Bereich der Seitenwand 1 weist diese ein offenes, im wesentlichen C-förmiges Profilteil 2 mit konstantem Querschnitt auf, welches in Längsrichtung angeordnet ist. An der Oberseite des Profilteils 2 sind ein A-Säulen-Innenteil 3 und ein B-Säulen-Innenteil 4 aufgesetzt und z.B. durch Punktschweißen angebracht, was eine besonders rationelle Verbindungsmöglichkeit darstellt. Das A-Säulen-Innenteil 3 und das B-Säulen-Innenteil 4 können alternativ auch in das Profilteil 2 eintauchend angeordnet sein.

Zur Abstützung des A-Säulen-Innenteils 3 und des B-Säulen-Innenteils 4 an dem Profilteil 2 werden die Innenteile 3 und 4 mit dem Profilteil 2 über zusätzliche Schließteile 5, die als eine Art Anlaufschräge ausgebildet sind, verbunden. Diese Verbindung kann ebenfalls durch Punktschweißen realisiert werden. Dabei können die Schließteile 5 auch in das A-Säulen-Innenteil 3 und das B-Säulen-Innenteil 4 integriert sein. Ein nicht dargestelltes C-Säulen-Innenteil ist dabei an einem ebenfalls nicht dargestellten Fahrzeugboden angebracht.

Über das Profilteil 2, das A-Säulen-Innenteil 3 und das B-Säulen-Innenteil 4 wird, wie in Fig. 2 dargestellt, eine Seitenwandbeplankung 6 angebracht, welche die äußere Haut der Seitenwand 1 bildet. Die Seitenwandbeplankung 6 weist dabei ein A-Säulen-Außenteil 7, ein B-Säulen-Außenteil 8 sowie ein C-Säulen-Außenteil 9 auf. Durch diesen Aufbau ist die Seitenwand 1 in geringem Maße verschiebbar, wodurch auftretende Fertigungstoleranzen sehr gut ausgeglichen werden können. Die Seitenwandbeplankung 6 ist dabei aus unlegiertem Stahl hergestellt, wodurch sie für die Außenhaut der Karosserie sehr gut geeignet ist.

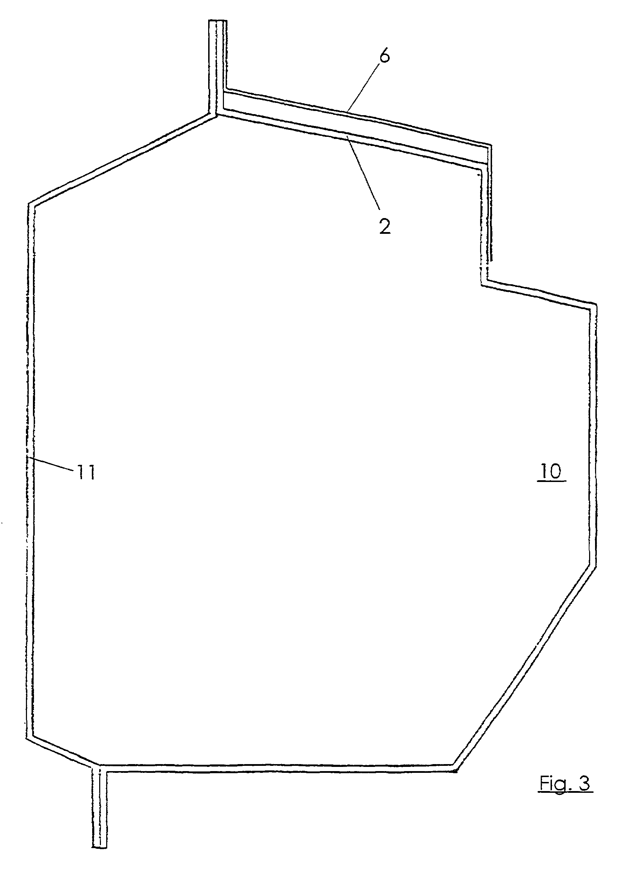

Fig. 3 stellt einen Schnitt durch den unteren Bereich der Seitenwand 1 und somit durch das Profilteil 2 dar. Dieser Figur ist entnehmbar, daß das Profil des Profilteils 2 sehr stark zur Fahrzeugaußenseite hin verlagert ist. Dies wird dadurch ermöglicht, daß das Profilteil 2 durch Walzprofilieren hergestellt wird, wodurch gegenüber anderen Umformverfahren ein sehr hoher Umformgrad möglich ist.

Mit anderen Worten ist das Profilteil 2 an der Karosserieaußenseite mit einem Vorsprung 10 versehen, dessen Tiefe sehr viel höher ist, als es bei solchen Bauteilen üblich ist. Des weiteren ist das Profilteil 2 an seinen Ecken mit sehr engen Radien versehen, die aufgrund ihrer geringen Größe in Fig. 3 nicht dargestellt sind. Durch den Vorsprung 10 wird in Verbindung mit den sehr kleinen Radien die Steifigkeit des Profilteiles 2 erheblich erhöht, wodurch die gesamte Seitenwand 1 einen stark verbesserten Seitenaufprallschutz bietet. Die aufnehmbaren Kräfte sind dabei um so höher, je weiter das Profil des Profilteiles 2 nach außen verschoben ist bzw. je größer der Vorsprung 10 ist.

Die Steifigkeit des Profilteils 2 erhöht sich zusätzlich noch durch die Verwendung von hochfestem Stahl. Andererseits können durch den hochfesten Stahl die Bleche sehr viel dünner als sonst üblich ausgebildet sein und es kann sich ein sehr viel geringeres Gewicht und eine bessere Verformbarkeit für das Profilteil 2 ergeben.

Für eine weitere Erhöhung der Steifigkeit kann das Profilteil 2 mit nicht dargestellten Verprägungen versehen sein, welche dann senkrecht oder waagrecht zur Längsrichtung des Profilteiles 2 verlaufen und an den für einen erhöhten Seitenaufprallschutz günstigen Stellen angeordnet sind. Zu diesem Zweck können zusätzliche, gesteuerte, nicht dargestellte Rollenwalzen bei der Herstellung des Profilteiles 2 verwendet werden.

Fig. 3 ist ebenfalls zu entnehmen, daß die Seitenwandbeplankung 6 nicht bis zur Unterseite des Profilteils 2 sondern nur bis zum oberen Rand des Vorsprunges 10 nach unten gezogen ist. Dadurch wird eine zu große Ziehtiefe für die Seitenwandbeplankung 6 vermieden.

Dies bedeutet jedoch auch, daß das Profilteil 2, welches ja aus einem hochfesten Stahl hergestellt ist, der für die notwendige Qualität der Außenhaut einer Kfz-Karosserie nicht ausreicht, an seiner Außenseite mit einer zusätzlichen, nicht dargestellten Schwellerverkleidung versehen werden muß. Diese Schwellerverkleidung kann dabei aus Kunststoff bestehen und somit den jeweiligen Gegebenheiten an einem Fahrzeug designmäßig sehr gut angepaßt werden. Die Seitenschwellerverkleidung aus Kunststoff kann des weiteren aerodynamisch weitaus besser gestaltet werden, als wenn es sich dabei um ein Funktionsteil der Seitenwand bzw. der Bodengruppe handelt.

Dabei kann die Kunststoff-Schwellerverkleidung in einfacher weise auf das Profilteil 2 aufgeclipst werden, wozu dieses bereits beim Walzen oder auch in einem späteren Verfahrensschritt mit nicht dargestellten Bohrungen versehen wird.

An der der Karosserieinnenseite zugewandten Seite ist das Profilteil 2 mit einem Innenschweller 11 verbunden, welcher gleichzeitig die Verbindung zu einem nicht dargestellten Fahrzeugboden herstellt. Der Innenschweller 11 ist in Fig. 3 nur teilweise dargestellt. Diese Verbindung kann durch Punktschweißen oder auch durch andere bekannte Verbindungsverfahren realisiert sein.

## Patentansprüche

1. Karosseriesegment für ein Kraftfahrzeug im Bereich einer Seitenwand (1), mit folgenden Merkmalen:
1.1 ein in Richtung der Karosserieinnseite offenes, wenigstens annähernd C-förmiges Profilteil (2), welches in Längsrichtung der Karosserie verläuft, mit einem Profil, das starke Verlagerungen zur Karosserieaußenseite aufweist,
1.2 einen in Richtung der Karosserieinnenseite an dem Profilteil (2) angebrachten Innenschweller (11),
1.3 an dem Profilteil (2) ist ein A-Säulen-Innenteil (3) und ein B-Säulen-Innenteil (4) angebracht,
1.4 eine in Richtung der Karosserieaußenseite teilweise über dem Profilteil (2) angebrachte Seitenwandbeplankung (6),
1.5 die Seitenwandbeplankung (6) weist ein A-Säulen-Außenteil (7), ein B-Säulen-Außenteil (8) und/oder ein C-Säulen-Außenteil (9) auf,
**dadurch gekennzeichnet, daß**
1.6 das Profilteil (2) aus einem hochfesten Stahl ausgebildet ist,
1.7 das Profilteil (2) durch Walzprofilieren hergestellt ist und einen konstanten Querschnitt aufweist, und
1.8 zur Verbindung des A-Säulen-Innenteils (3) und des B-Säulen-Innenteils (4) mit dem Profilteil (2) zusätzliche Schließteile (5) vorgesehen sind.

2. Karosseriesegment nach Anspruch 1,
**dadurch gekennzeichnet, daß**
an dem Profilteil (2) auftretende Ecken mit einem Radius geringer Größe versehen sind.

3. Karosseriesegment nach Anspruch 1 oder 2,
**dadurch gekennzeichnet, daß**
die Seitenwandbeplankung (6) aus unlegiertem Karosseriestahl ausgebildet ist.

4. Karosseriesegment nach Anspruch 1, 2 oder 3,
**dadurch gekennzeichnet, daß**
das Profilteil (2) mit Verprägungen versehen ist, die senkrecht oder waagrecht zur Längsachse des Profilteiles (2) verlaufen.

5. Karosseriesegment nach Anspruch 4,
**dadurch gekennzeichnet, daß**
die Verprägungen durch gesteuerte Rollen herstellbar sind.

6. Karosseriesegment nach einem der Ansprüche 1 bis 4,
**dadurch gekennzeichnet, daß**
in Richtung der Karosserieaußenseite über dem Profilteil (2) in seinem unteren Bereich eine Schwellerverkleidung, vorzugsweise aus Kunststoff, angebracht ist.

7. Karosseriesegment nach Anspruch 6,
**dadurch gekennzeichnet, daß**
die Schwellerverkleidung auf das Profilteil (2) aufgeclipst ist, wobei das Profilteil (2) mit entsprechenden Bohrungen versehen ist.

8. Karosseriesegment nach einem der Ansprüche 1 bis 7,
**dadurch gekennzeichnet, daß**
das A-Säulen-Innenteil (3) und das B-Säulen-Innenteil (4) mit dem Profilteil (2) durch Punktschweißen verbunden sind.

9. Karosseriesegment nach einem der Ansprüche 1 bis 8,
**dadurch gekennzeichnet, daß**
der Innenschweller (11) mit dem Profilteil (2) durch Punktschweißen verbunden ist.

## Claims

1. A body segment for a motor vehicle in the area of a side panel (1) with the following features:
1.1 an at least approximately C-shaped profiled section (2) open to the interior of the body which runs along the length of the body with a profile which has strong offset towards the exterior of the body,
1.2 an inner sill (11) mounted on the profiled section (2) towards the interior of the body,
1.3 an A-pillar inner panel (3) and a B-pillar inner panel (4) are mounted on the profiled section (2),
1.4 a side panel cladding panel (6) mounted towards the exterior of the body partially over the profiled section (2),
1.5 the side panel cladding panel (6) has an A-pillar outer panel (7), a B-pillar outer panel (8) and/or a C-pillar outer panel (9),
**characterised in that**
1.6 the profiled section (2) is made of a high-tensile steel,
1.7 the profiled section (2) is manufactured by means of roll forming and has a constant cross-section,
1.8 additional locking parts (5) are provided to connect the A-pillar inner part (3) and the B-pillar inner part (4) to the profiled section (2).

2. A body segment in accordance with claim 1,
**characterised in that**
the comers occurring on the profiled section (2) are provided with radii of small size.

3. A body segment in accordance with claim 1 or 2,
**characterised in that**
the side panel cladding panel (6) is made of unalloyed body steel.

4. A body segment in accordance with claim 1, 2 or 3,
**characterised in that**
the profiled section (2) is provided with bosses which run vertically or horizontally in relation to the longitudinal axis of the profiled section (2).

5. A body segment in accordance with claim 4,
**characterised in that**
the bosses can be manufactured by means of controlled rolling.

6. A body segment in accordance with one of claims 1 to 4,
**characterised in that** a sill cover, preferably made of plastic, is mounted towards the exterior of the body over the profiled section (2) in its lower area.

7. A body segment in accordance with claim 6,
**characterised in that** the sill cover is clipped to the profiled section (2), the profiled section (2) being provided with corresponding holes.

8. A body segment in accordance with one of claims 1 to 7,
**characterised in that** the A-pillar inner panel (3) and the B-pillar inner panel (4) are connected to the profiled section (2) by means of spot welding.

9. A body segment in accordance with one of claims 1 to 8,
**characterised in that**
the inner sill (11) is connected to the profiled section (2) by means of spot welding.

## Revendications

1. Segment de carrosserie pour un véhicule dans la zone d'un panneau latéral (1), ayant les caractéristiques suivantes :
1.1 il comprend une pièce profilée (2) au moins presque en forme de C, ouverte dans le sens du côté intérieur de la carrosserie, laquelle pièce profilée s'étend dans la direction longitudinale de la carrosserie, en ayant un profil qui présente d'importants décalages par rapport au côté extérieur de la carrosserie,
1.2 un seuil de porte intérieur (11) est fixé sur la pièce profilée (2) dans la direction du côté intérieur de la carrosserie,
1.3 une pièce intérieure (3) du montant A et une pièce intérieure (4) du montant B sont fixées sur la pièce profilée (2),
1.4 un revêtement (6) formant panneau latéral est fixé partiellement au-dessus de la pièce profilée (2), dans la direction du côté extérieur de la carrosserie,
1.5 le revêtement (6) formant panneau latéral comprend une pièce extérieure (7) du montant A, une pièce extérieure (B) du montant B et/ou une pièce extérieure (9) du montant C,
**caractérisé**
1.6 **en ce que** la pièce profilée (2) se compose d'un acier à résistance élevée,
1.7 **en ce que** la pièce profilée (2) est fabriquée suivant un processus de profilage par laminage et qu'elle présente une section constante, et
1.8 **en ce qu**'il est prévu des pièces de fermeture (5) supplémentaires pour l'assemblage de la pièce intérieure (3) du montant A et de la pièce intérieure (4) du montant B, avec la pièce profilée (2).

2. Segment de carrosserie selon la revendication 1, **caractérisé en ce que** des coins apparaissant sur la pièce profilée (2) sont parcourus d'un rayon de faible dimension.

3. Segment de carrosserie selon la revendication 1 ou 2 **caractérisé en ce que** le revêtement (6) formant panneau latéral se compose d'un acier de carrosserie non allié.

4. Segment de carrosserie selon la revendication 1, 2 ou 3, **caractérisé en ce que** la pièce profilée (2) est dotée de nervures qui s'étendent verticalement ou horizontalement par rapport à l'axe longitudinal de la pièce profilée (2).

5. Segment de carrosserie selon la revendication 4, **caractérisé en ce que** les nervures peuvent être réalisées par des rouleaux commandés.

6. Segment de carrosserie selon l'une quelconque des revendications 1 à 4, **caractérisé en ce qu'**un revêtement de seuil de porte, de préférence en matière plastique, est fixé au-dessus de la pièce profilée (2), dans sa zone inférieure et en direction du côté extérieur de la carrosserie.

7. Segment de carrosserie selon la revendication 6, **caractérisé en ce que** le revêtement de seuil de porte est clipsé sur la pièce profilée (2), la pièce profilée (2) étant dotée de perçages correspondants.

8. Segment de carrosserie selon l'une quelconque des revendications 1 à 7, **caractérisé en ce que** la pièce intérieure (3) du montant A et la pièce intérieure (4) du montant B sont assemblées avec la pièce profilée (2) par soudage par points.

9. Segment de carrosserie selon l'une quelconque des revendications 1 à 8, **caractérisé en ce que** le seuil de porte intérieur (11) est assemblé avec la pièce profilée (2) par soudage par points.
